# FASCICULE DE BREVET EUROPEEN

(11) **EP 1 705 067 B1**
(45) Date de publication et mention de la délivrance du brevet: **01.10.2008**
(21) Numéro de dépôt: 06300283.6
(22) Date de dépôt: 24.03.2006
(51) Int. Cl.: B60R 11/02

(54) **Entretoise pour fixer un haut-parleur à l'intérieur d'une portière de véhicule automobile**
Distanzstück zur Befestigung eines Lautsprechers an einer Kraftfahrzeugtür
Space holder for the mounting of a loud speaker on a vehicle door

(30) Priorité: 24.03.2005 FR 0502935
(43) Date de publication de la demande: 27.09.2006
(73) Titulaire: RENAULT S.A.S., 92100 Boulogne Billancourt (FR)
(72) Inventeur: Saclier, Nils, 78490, Grosrouvre (FR); Parcellier, Christophe, 78390, Bois d' Arcy (FR)

(56) Documents cités:
- US-A- 4 161 995
- US-A- 4 588 627
- PATENT ABSTRACTS OF JAPAN vol. 2003, no. 12, 5 décembre 2003 (2003-12-05) & JP 2004 330964 A (FUJI HEAVY IND LTD), 25 novembre 2004 (2004-11-25)
- PATENT ABSTRACTS OF JAPAN vol. 1995, no. 08, 29 septembre 1995 (1995-09-29) & JP 07 117570 A (SUZUKI MOTOR CORP), 9 mai 1995 (1995-05-09)
- PATENT ABSTRACTS OF JAPAN vol. 010, no. 326 (M-532), 6 novembre 1986 (1986-11-06) & JP 61 132443 A (NISSAN MOTOR CO LTD), 19 juin 1986 (1986-06-19)
- PATENT ABSTRACTS OF JAPAN vol. 018, no. 205 (E-1536), 12 avril 1994 (1994-04-12) & JP 06 006885 A (MITSUBISHI ELECTRIC CORP), 14 janvier 1994 (1994-01-14)

## Description

La présente invention concerne une entretoise pour fixer un haut-parleur de radio à l'intérieur d'une portière de véhicule automobile.

L'invention concerne également un ensemble comportant une portière de véhicule automobile à l'intérieur de laquelle est fixé un haut-parleur au moyen de l'entretoise ci-dessus.

Habituellement, une portière de véhicule automobile comporte une garniture intérieure amovible et une feuille en matière plastique qui réalise l'étanchéité entre un compartiment de la portière adjacent à sa paroi extérieure et un compartiment intérieur adjacent à la garniture intérieure de la portière.

Le plus souvent, la garniture intérieure de la portière comporte une grille non démontable derrière laquelle est fixée le haut-parleur. La membrane de ce haut-parleur est disposée en regard de la grille.

La périphérie de ce haut-parleur est elle-même fixée directement à une partie rigide du caisson de la portière.

L'un des inconvénients de ce mode de fixation est que le haut-parleur doit être fixé dans la portière avant la mise en place de la garniture intérieure de la portière, dans le cas de la fabrication d'un véhicule neuf ou après démontage de la garniture, dans le cas où on veut fixer un haut-parleur ultérieurement.

Le but de la présente invention est de faciliter et d'optimiser la mise en place d'un haut-parleur dans une portière de véhicule automobile en créant une entretoise servant de support pour le haut-parleur et comportant des moyens de fixation à une partie rigide du caisson de la portière.

La publication JP 2004 330 964 divulgue un autre type de fixation d'un haut-parleur dans une portière de véhicule, dans lequel le haut-parleur est monté sur le caisson de portière par l'intermédiaire d'une entretoise.

Suivant l'invention, l'entretoise pour fixer un haut-parleur à l'intérieur d'une portière de véhicule automobile est caractérisée en ce qu'elle comprend un corps cylindrique comportant, d'une part, près de l'une de ses faces axiales, plusieurs pattes de fixation en saillie vers l'extérieur, présentant chacune un trou de passage d'une vis pour fixer ladite patte à une partie rigide du caisson de la portière et, d'autre part, près de l'autre de ses faces axiales, une collerette radiale faisant saillie vers l'intérieur dudit corps destinée à servir d'appui pour la périphérie du haut-parleur, cette collerette présentant des trous de passage pour des vis pour fixer la périphérie du haut-parleur à ladite collerette.

De préférence, ladite collerette porte, sur sa face opposée à celle destinée à servir d'appui pour la périphérie du haut-parleur, une paroi destinée à s'étendre au-dessus du haut-parleur pour protéger le connecteur de branchement des fils d'alimentation électrique du haut-parleur.

Cette paroi peut être sensiblement en forme de demi-cylindre centré sur l'axe du corps cylindrique de l'entretoise.

Dans une version avantageuse de l'invention, ladite collerette radiale comporte, dans la zone de chaque trou de passage pour une vis de fixation de la périphérie du haut-parleur, un évidement radial conformé pour recevoir et maintenir une patte radiale complémentaire de ladite périphérie du haut-parleur.

De préférence, chaque évidement radial comporte un moyen de détrompage pour le montage du haut-parleur.

Dans une réalisation particulière de l'entretoise, lesdites pattes de fixation en saillie vers l'extérieur du corps de l'entretoise sont au nombre de trois et les trous de passage des vis de fixation de la périphérie du haut-parleur sont au nombre de deux, ceux-ci s'intercalant entre lesdites pattes de fixation.

L'invention vise également un ensemble comprenant une portière de véhicule automobile à l'intérieur de laquelle est fixé un haut-parleur au moyen de l'entretoise précitée.

Suivant cet aspect de l'invention, cette portière porte, de façon connue, une garniture intérieure et une feuille en matière plastique qui réalise l'étanchéité entre un compartiment de la portière adjacent à sa paroi extérieure et un compartiment intérieur adjacent à ladite garniture intérieure.

Selon l'invention, l'ensemble ci-dessus est caractérisé en ce que l'entretoise est engagée dans une ouverture pratiquée dans la feuille en matière plastique, ses pattes de fixation recouvrant le bord de ladite feuille adjacent à ladite ouverture et étant fixées à une partie rigide du caisson de la portière située derrière la feuille en matière plastique, la périphérie du haut-parleur étant fixée contre la collerette radiale de l'entretoise par l'intermédiaire d'un joint souple compris entre ladite périphérie et ladite collerette et en ce qu'une grille distincte du haut-parleur est fixée de façon amovible dans une ouverture pratiquée dans ladite garniture intérieure en regard du haut-parleur.

D'autres particularités et avantages de l'invention apparaîtront encore dans la description ci-après.

Aux dessins annexés, donnés à titre d'exemples non limitatifs :
- la figure 1 est une vue en perspective d'une entretoise de fixation d'un haut-parleur selon l'invention,
- la figure 2 est une vue en perspective de l'entretoise selon la figure 1, prise suivant un angle différent,
- la figure 3 est une vue d'un détail montrant la fixation de la périphérie du haut-parleur à l'entretoise,
- la figure 4 est une vue en coupe montrant la fixation d'un haut-parleur au moyen de l'entretoise selon l'invention, à l'intérieur d'une portière.

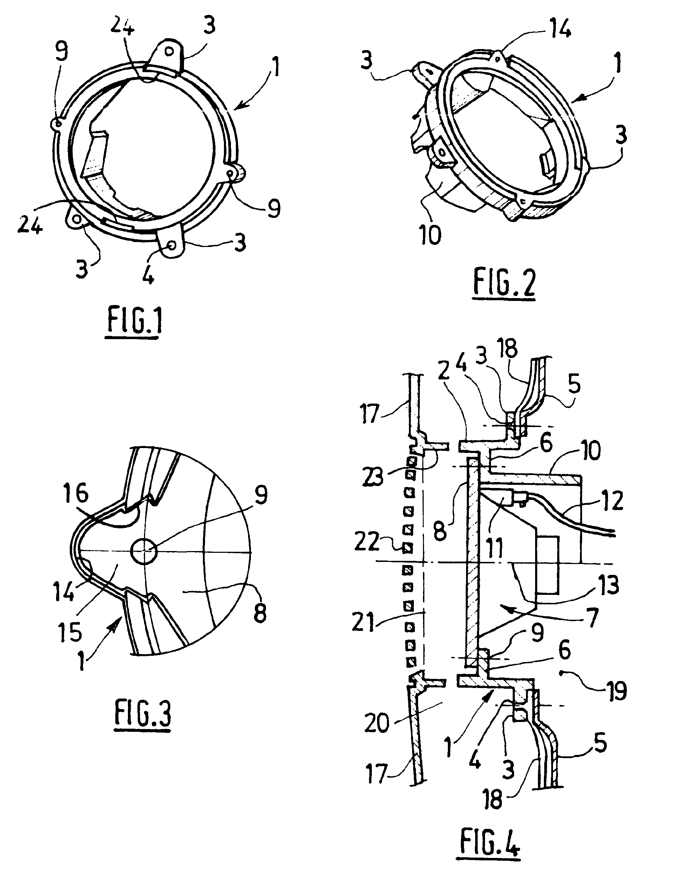

Les figures 1 à 4 représentent une entretoise 1 pour fixer un haut-parleur à l'intérieur d'une portière de véhicule automobile. Cette entretoise 1 comprend un corps cylindrique 2 comportant, d'une part, près de l'une de ses faces axiales, plusieurs pattes 3 de fixation en saillie vers l'extérieur, présentant chacune un trou 4 de passage d'une vis pour fixer la patte 3 à une partie rigide 5 (voir figure 4) du caisson de la portière et, d'autre part, près de l'autre de ses faces axiales, une collerette radiale 6 faisant saillie vers l'intérieur du corps 2 destinée à servir d'appui pour la périphérie 8 du haut-parleur 7 (voir figure 4). Cette collerette 6 présente des trous de passage 9 pour des vis pour fixer la périphérie 8 du haut-parleur 7 à la collerette 6.

Le corps cylindrique 2 de l'entretoise comporte également des pattes de clippage 24 (figure 1) qui permettent de maintenir le haut-parleur 7 en coopérant avec sa périphérie 8. Ces pattes permettent également d'assurer un maintien du haut-parleur 7 pendant le montage avant sa fixation définitive. Dans l'exemple, deux pattes 24 diamétralement opposées sont prévues.

La collerette 6 porte, sur sa face opposée à celle destinée à servir d'appui pour la périphérie 8 du haut-parleur 7, une paroi 10 (voir figures 2 et 4) destinée à s'étendre au-dessus du haut-parleur 7 pour protéger le connecteur 11 de branchement des fils 12 d'alimentation électrique du haut-parleur 7.

Dans l'exemple représenté, la paroi 10 est sensiblement en forme de demi-cylindre centré sur l'axe 13 du corps cylindrique 2 de l'entretoise 1.

Par ailleurs, comme montré par les figures 1 à 3, la collerette radiale 6 comporte, dans la zone de chaque trou de passage 9 pour une vis de fixation de la périphérie 8 du haut-parleur, un évidement radial 14 conformé pour recevoir et maintenir une patte radiale 15 complémentaire de la périphérie 8 du haut-parleur 7.

De plus, chaque évidement radial 14 comporte un moyen de détrompage 16 (voir figure 3) pour le montage du haut-parleur 7.

Dans l'exemple représenté sur les figures 1 à 3, les pattes de fixation 3 en saillie vers l'extérieur du corps 2 de l'entretoise sont au nombre de trois et les trous de passage 9 des vis de fixation de la périphérie 8 du haut-parleur 7 sont au nombre de deux, ceux-ci s'intercalant entre les pattes de fixation 3, comme montré notamment par la figure 1.

La figure 4 montre le haut-parleur 7 fixé à l'intérieur d'une portière de droite d'un véhicule automobile.

Cette portière porte une garniture intérieure 17 et une feuille 18 en matière plastique qui réalise l'étanchéité entre un compartiment 19 de la portière adjacent à sa paroi extérieure (non représentée) et un compartiment intérieur 20 adjacent à la garniture intérieure 17. L'entretoise 1 est engagée dans une ouverture circulaire pratiquée dans la feuille 18 en matière plastique, ses pattes de fixation 3 recouvrant le bord de cette feuille adjacent à l'ouverture de celle-ci. Ces pattes 3 sont fixées au moyen de vis à une partie rigide 5 du caisson de la portière située derrière la feuille 18 en matière plastique, de sorte que le bord de celle-ci est pincé entre les pattes 3 et la partie rigide 5. La périphérie 8 du haut-parleur 7 est fixée contre la collerette radiale 6 de l'entretoise 1 par l'intermédiaire d'un joint souple (non représenté) compris entre la périphérie 8 et la collerette 6. Par ailleurs, une grille 22 distincte du haut-parleur 7 est fixée de façon amovible dans une ouverture 21 pratiquée dans la garniture intérieure 17 en regard du haut-parleur 7.

De plus, comme on le voit sur la figure 4, la garniture intérieure 17 présente, sur le pourtour de son ouverture 21, une collerette 23 en saillie vers l'intérieur de la portière et située sensiblement dans le prolongement du corps cylindrique 2 de l'entretoise.

Cette collerette 23 définit ainsi, avec l'extrémité de l'entretoise 1, un volume cylindrique qui permet de guider les ondes sonores émises par le haut-parleur 7 vers la grille 22.

Pour fixer le haut-parleur 7 dans la portière, on procède comme suit :

Dans une première étape, qui peut être réalisée en usine, on fixe le haut-parleur 7 sur l'entretoise 1.

A cet effet, on engage la partie arrière du haut-parleur 7 dans le corps cylindrique 2 de l'entretoise et on applique la périphérie 8 du haut-parleur sur la collerette radiale 6 de l'entretoise, en engageant les pattes radiales 15 de la périphérie 8 du haut-parleur dans les deux évidements 14 de l'entretoise. Un détrompeur permet d'éviter toute erreur de montage pour que le connecteur 11 du haut-parleur soit situé du côté de la paroi de protection 10 de l'entretoise.

Il suffit ensuite de mettre en place les vis dans les trous 9 pour fixer définitivement le haut-parleur 7 à l'entretoise 1. L'ensemble est alors prêt à être monté dans la portière. A cet effet, on place les trois pattes en saillie 3 de l'entretoise en regard des trois trous correspondants réalisés dans la partie rigide 5 du caisson de la portière, en prenant soin de recouvrir la feuille d'étanchéité 18. Il suffit ensuite de mettre en place et de serrer les vis dans les trous 4 pratiqués dans les pattes 3 de l'entretoise pour fixer celle-ci à la partie rigide 5 de la portière.

L'ensemble ci-dessus ferme ainsi, de façon étanche, l'ouverture pratiquée dans la feuille d'étanchéité 18.

En fin d'opération, on met en place la garniture intérieure 17, ce qui a pour effet de placer la grille 22 en regard du haut-parleur 7 et la collerette 23 en regard, de l'extrémité du corps cylindrique 2 de l'entretoise.

Pour démonter le haut-parleur 7, il suffit d'enlever la grille 22 puis de desserrer les vis de fixation de la périphérie 8 du haut-parleur sur la collerette radiale 6 de l'entretoise.

L'entretoise 1 peut être réalisée économiquement en matière plastique moulée et convient pour fixer un haut-parleur dans l'une quelconque des portières avant ou arrière, de gauche ou de droite d'un véhicule automobile.

## Revendications

1. Entretoise (1) pour fixer un haut-parleur à l'intérieur d'une portière de véhicule automobile, comprenant un corps cylindrique (2) comportant, d'une part, près de l'une de ses faces axiales, plusieurs pattes (3) de fixation en saillie vers l'extérieur, présentant chacune un trou (4) de passage d'une vis pour fixer ladite patte (3) à une partie rigide (5) du caisson de la portière et, d'autre part, près de l'autre de ses faces axiales, une collerette radiale (6) faisant saillie vers l'intérieur dudit corps (2) destinée à servir d'appui pour la périphérie (8) du haut-parleur (7), cette collerette (6) présentant des trous de passage (9) pour des vis pour fixer la périphérie (8) du haut-parleur (7) à ladite collerette (6), **caractérisée en ce que** ladite collerette radiale (6) comporte, dans la zone de chaque trou de passage (9) pour une vis de fixation de la périphérie (8) du haut-parleur, un évidement radial (14) conformé pour recevoir et maintenir une patte radiale (15) complémentaire de ladite périphérie (8) du haut-parleur (7).

2. Entretoise selon la revendication 1, **caractérisée en ce que** ladite collerette (6) porte, sur sa face opposée à celle destinée à servir d'appui pour la périphérie (8) du haut-parleur (7), une paroi (10) destinée à s'étendre au-dessus du haut-parleur (7) pour protéger le connecteur (11) de branchement des fils (12) d'alimentation électrique du haut-parleur (7).

3. Entretoise selon la revendication 2, **caractérisée en ce que** ladite paroi (10) est sensiblement en forme de demi-cylindre centré sur l'axe (13) du corps cylindrique (2) de l'entretoise (1).

4. Entretoise selon la revendication 1, **caractérisée en ce que** chaque évidement radial (14) comporte un moyen de détrompage (16) pour le montage du haut-parleur (7).

5. Entretoise selon l'une des revendications 1 à 4, **caractérisée en ce que** lesdites pattes de fixation (3) en saillie vers l'extérieur du corps (2) de l'entretoise sont au nombre de trois et les trous de passage (9) des vis de fixation de la périphérie (8) du haut-parleur (7) sont au nombre de deux, ceux-ci s'intercalant entre lesdites pattes de fixation (3).

6. Ensemble comprenant une portière de véhicule automobile à l'intérieur de laquelle est fixé un haut-parleur (7) au moyen d'une entretoise (1) selon l'une des revendications 1 à 5, cette portière portant une garniture intérieure (17) et une feuille (18) en matière plastique qui réalise l'étanchéité entre un compartiment (19) de la portière adjacent à sa paroi extérieure et un compartiment intérieur (20) adjacent à ladite garniture intérieure (17), **caractérisé en ce que** l'entretoise (1) est engagée dans une ouverture pratiquée dans la feuille (18) en matière plastique, ses pattes de fixation (3) recouvrant le bord de ladite feuille adjacent à ladite ouverture et étant fixées à une partie rigide (5) du caisson de la portière située derrière la feuille (18) en matière plastique, la périphérie (8) du haut-parleur (7) étant fixée contre la collerette radiale (6) de l'entretoise (1) par l'intermédiaire d'un joint souple compris entre ladite périphérie (8) et ladite collerette (6) et **en ce qu'**une grille (22) distincte du haut-parleur (7) est fixée de façon amovible dans une ouverture (21) pratiquée dans ladite garniture intérieure (17) en regard du haut-parleur (7).

7. Ensemble selon la revendication 6, **caractérisé en ce que** ladite garniture intérieure (17) présente, sur le pourtour de son ouverture (21), une collerette (23) en saillie vers l'intérieur de la portière et située sensiblement dans le prolongement du corps cylindrique (2) de l'entretoise.

## Claims

1. Spacer (1) for the mounting of a loudspeaker on the inside of a motor vehicle door, comprising a cylindrical body (2) having, firstly, a plurality of mounting lugs (3) close to one of its axial surfaces and projecting outwards, each lug having a hole (4) for the passage of a screw in order to mount the said lug (3) on a rigid portion (5) of the door casing and, secondly, a radial flange (6) close to the other of its axial surfaces and projecting towards the inside of the said body (2), the said flange being intended to serve as a support for the periphery (8) of the loudspeaker (7), this flange (6) having holes (9) for the passage of screws in order to mount the periphery (8) of the loudspeaker (7) on the said flange (6), **characterized in that** the said radial flange (6) has, in the region of each hole (9) for the passage of a screw for mounting the periphery (8) of the loudspeaker, a radial recess (14) shaped so as to receive and hold a complementary radial lug (15) on the said periphery (8) of the loudspeaker (7).

2. Spacer according to Claim 1, **characterized in that** the said flange (6) bears, on its surface opposite that intended to serve as a support for the periphery (8) of the loudspeaker (7), a wall (10) that extends above the loudspeaker (7) in order to protect the electrical supply wire (12) connector (11) of the loudspeaker (7).

3. Spacer according to Claim 2, **characterized in that** the said wall (10) has an approximately semicylindrical shape centred on the axis (13) of the cylindrical body (12) of the spacer (1).

4. Spacer according to Claim 1, **characterized in that** each radial recess (14) has a polarizing means (16) for fitting the loudspeaker (7).

5. Spacer according to one of Claims 1 to 4, **characterized in that** there are three of the said mounting lugs (3) projecting outwards from the body (2) of the spacer and there are two of the holes (9) for the passage of screws for mounting the periphery (8) of the loudspeaker (7), the said holes being interposed between the said mounting lugs (3).

6. Assembly comprising a motor vehicle door, on the inside of which is mounted a loudspeaker (7) by means of a spacer (1) according to one of Claims 1 to 5, this door having an interior trim (17) and a plastic sheeting (18) which provides a seal between a compartment (19) of the door next to its outer wall and an inner compartment (20) next to the said interior trim (17), **characterized in that** the spacer (1) engages in an opening in the plastic sheeting (18), its mounting lugs (3) covering the edge of the said sheeting next the said opening and being mounted on a rigid portion (5) of the door casing located behind the plastic sheeting (18), the periphery (8) of the loudspeaker (7) being mounted against the radial flange (6) of the spacer (1) via a flexible joint between the said periphery (8) and the said flange (6) and **in that** a grille (22) separate from the loudspeaker (7) is mounted in a removable manner in an opening (21) in the said interior trim (17) in front of the loudspeaker (7).

7. Assembly according to Claim 6, **characterized in that** the said interior trim (17) has, around the rim of its opening (21), a flange (23) projecting towards the inside of the door and located approximately in line with the cylindrical body (2) of the spacer.

## Patentansprüche

1. Abstandshalter (1) zur Befestigung eines Lautsprechers in einer Kraftfahrzeugtür, mit einem zylindrischen Körper (2), der einerseits nahe einer seiner axialen Seiten mehrere nach außen vorstehende Befestigungslaschen (3), die je ein Durchgangsloch (4) für eine Schraube besitzen, um die Lasche (3) an einem steifen Teil (5) des Türkastens zu befestigen, und andererseits nahe der anderen seiner axialen Seiten einen radialen Kragen (6) aufweist, der zur Innenseite des Körpers (2) vorsteht und dazu bestimmt ist, als Auflage für den Umfang (8) des Lautsprechers (7) zu dienen, wobei dieser Kragen (6) Durchgangslöcher (9) für Schrauben aufweist, um den Umfang (8) des Lautsprechers (7) am Kragen (6) zu befestigen, **dadurch gekennzeichnet, dass** der radiale Kragen (6) in der Zone jedes Durchgangslochs (9) für eine Befestigungsschraube des Umfangs (8) des Lautsprechers eine radiale Aussparung (14) aufweist, die ausgebildet ist, um eine komplementäre radiale Lasche (15) des Umfangs (8) des Lautsprechers (7) aufzunehmen und zu halten.

2. Abstandshalter nach Anspruch 1, **dadurch gekennzeichnet, dass** der Kragen (6) auf seiner Seite entgegengesetzt zu derjenigen, die dazu bestimmt ist, als Auflage für den Umfang (8) des Lautsprechers (7) zu dienen, eine Wand (10) trägt, die dazu bestimmt ist, sich oberhalb des Lautsprechers (7) zu erstrecken, um den Verbindungsstecker (11) der Stromversorgungsdrähte (12) des Lautsprechers (7) zu schützen.

3. Abstandshalter nach Anspruch 2, **dadurch gekennzeichnet, dass** die Wand (10) im Wesentlichen die Form eines auf die Achse (13) des zylindrischen Körpers (2) des Abstandshalters (1) zentrierten Halbzylinders hat.

4. Abstandshalter nach Anspruch 1, **dadurch gekennzeichnet, dass** jede radiale Aussparung (14) ein Unverwechselbarkeitsmittel (16) für die Montage des Lautsprechers (7) aufweist.

5. Abstandshalter nach einem der Ansprüche 1 bis 4, **dadurch gekennzeichnet, dass** es drei nach außerhalb des Körpers (2) des Abstandshalters vorstehende Befestigungslaschen (3) und zwei Durchgangslöcher (9) für die Befestigungsschrauben des Umfangs (8) des Lautsprechers (7) gibt, wobei diese sich zwischen die Befestigungslaschen (3) einfügen.

6. Einheit mit einer Kraftfahrzeugtür, in deren Innerem ein Lautsprecher (7) mittels eines Abstandshalters (1) nach einem der Ansprüche 1 bis 5 befestigt ist, wobei diese Tür eine Innengarnitur (17) und eine Kunststofffolie (18) aufweist, die die Dichtheit zwischen einem Abteil (19) der Tür, das an ihre Außenwand angrenzt, und einem inneren Abteil (20) gewährleistet, das an die Innengarnitur (17) angrenzt, **dadurch gekennzeichnet, dass** der Abstandshalter (1) in eine Öffnung eingeführt ist, die in der Kunststofffolie (18) ausgebildet ist, wobei seine Befestigungslaschen (3) den Rand der Folie neben der Öffnung bedecken und an einem steifen Teil (5) des Türkastens befestigt sind, der sich hinter der Kunststoff-Folie (18) befindet, wobei der Umfang (8) des Lautsprechers (7) gegen den radialen Kragen (6) des Abstandshalters (1) mittels einer geschmeidigen Dichtung befestigt ist, die zwischen dem Umfang (8) und dem Kragen (6) liegt, und dass ein vom Lautsprecher (7) getrenntes Gitter (22) lösbar in einer Öffnung (21) befestigt ist, die in der Innengarnitur (17) gegenüber dem Lautsprecher (7) ausgebildet ist.

7. Einheit nach Anspruch 6, **dadurch gekennzeichnet, dass** die Innengarnitur (17) auf dem Umfang ihrer Öffnung (21) einen zur Innenseite der Tür vorstehenden Kragen (23) aufweist, der sich im Wesentlichen in der Verlängerung des zylindrischen Körpers (2) des Abstandshalters befindet.
